# EUROPEAN PATENT SPECIFICATION

(11) **EP 1 884 180 B1**
(45) Date of publication and mention of the grant of the patent: **22.06.2011**
(21) Application number: 07252928.2
(22) Date of filing: 24.07.2007
(51) Int. Cl.: A47L 9/00, A01G 1/12

(54) **Debris collector**
Ablagerungskollektor
Collecteur de débris

(30) Priority: 31.07.2006 GB 0615212
(43) Date of publication of application: 06.02.2008
(60) Divisional application: 09011237.6
(73) Proprietor: Husqvarna UK Limited, County Durham, DL5 6UP (GB)
(72) Inventor: Smith, Ian Zetterstrom, Thirsk, Yorkshire Y07 2LJ (GB); Duffy, Colin, County Durham DL16 7BW (GB)
(74) Representative: Pratt, David Martin

(56) References cited:
- EP-A- 1 442 653
- DE-A1- 19 549 419
- US-A- 4 074 458
- US-A1- 2004 221 416

## Description

This invention relates to an apparatus for collecting debris including grass cuttings, vegetation, fallen leaves and other rubbish frequently encountered on gardens, public highways and parklands.

Our European Patent 501675 describes a collection device comprising a chassis, means for supporting the device above ground datum, an impeller for establishing a flow of air, a duct directly or indirectly supported on the chassis for conveying loose material entrained in a stream of air from said source towards a downstream region thereof from a collection mouth at an upstream end thereof, a removable collection container for collecting said loose material and disposed in proximity to the downstream region of the duct, at least one air outlet disposed adjacent the collection mouth, each aperture serving to direct at least a portion of the stream of air downstream of the collection mouth so as to draw loose material into the mouth and transport the same via the duct into the collection container.

An improved version of this type of collection device can be operated in either a "vac" mode, in which the impeller sucks in air from the collection mouth together with entrained debris, and a "blow" mode in which air is directed from the impeller towards the collection mouth via a dedicated passageway so that the debris collector can be used to blow debris into suitable heaps for subsequent collection. This modified form of debris collector includes a rotary valve for diverting the stream of air from the impeller either to a debris collection bag or to the dedicated "blow" passageway.

One disadvantage of this arrangement is that the rotary valve is bulky, and increases the overall size of the debris collector. Moreover, because of the configuration of the rotary valve debris tends to adhere thereto, which reduces the efficiency of debris collection, and requires frequent cleaning. Unfortunately, the rotary valve is difficult to access, so cleaning is difficult if not impossible without dismantling the debris collector.

This known debris collector also suffers from debris adhering to the impeller and to the passageways to and from the impeller. Here again, adhered debris reduces the efficiency of the machine, and its removal is extremely difficult or impossible without dismantling the machine.

Another debris collector is known from document EP 1 442 653. However this debris collector presents the disadvantage of comprising several parts that must be detached to give access to the impeller and the duct.

Document DE 195 49 419 describes a debris collector with an access to the impeller but not to the duct.

The present invention provides a debris collector comprising a chassis; an impeller for establishing a flow of air; and a duct supported by the chassis for conveying loose material entrained in a stream of air generated by the impeller towards a proximal region of the duct from a collection mouth at a distal end thereof; wherein the impeller is mounted in a housing at the proximal end of the duct, the housing being pivotably attached to the chassis in such a manner that pivotal movement of the housing away from the chassis exposes the impeller and the downstream end of the duct for cleaning purposes.

The debris collector may further comprise a removable collection container for collecting the loose material, and the chassis being formed with a nozzle for directing the stream of air and loose material from the impeller into the removable collection container.

Preferably, the nozzle is directly aligned with the impeller, and is provided with smooth side walls for directing the air stream and loose material into the removable collection container.

In a preferred embodiment, the debris collector further comprises an air passageway leading from the impeller to the collection mouth, the air passageway being separate from the duct.

Advantageously, the debris collector further comprises a valve for directing the stream of air from the impeller either into the nozzle or into the air passageway.

Conveniently, the valve is a slide valve mounted in the chassis for movement between a first position, in which the air stream passes from the impeller into the air passageway, and a second position, in which the air stream passes from the impeller into the nozzle.

Preferably, the slide valve is positioned in such a manner that pivotal movement of the housing relative to the chassis to expose the impeller and the downstream end of the duct, also exposes the slide valve for cleaning purposes. The slide valve may define a substantially smooth air-stream-engaging surface.

In a preferred embodiment, the duct is constituted by primary and secondary ducts, the primary duct being fixed to the chassis, and the secondary duct being telescopically mounted with respect to the primary duct.

Preferably, the air passageway is constituted by first and second air passageways associated respectively with the primary and secondary ducts.

Advantageously, the first air passageway is positioned on the exterior of the primary duct, and the second air passageway is positioned within the secondary duct.

Conveniently, the first and second air passageways are so formed that, when the secondary duct is fully telescoped out of the primary duct, the distal end of the first air passageway is contiguous with the proximal end of the second air passageway.

Preferably, the distal end of the primary duct and the proximal end of the secondary duct are provided with interengageable means for locking the two ducts together when the secondary duct is fully telescoped out with respect to the primary duct. Advantageously, the interengageable means is constituted by an aperture formed in the proximal end of the secondary duct, and by a flanged tab formed at the distal end of the primary duct, the flanged tab being engageable in the aperture when the secondary duct is fully telescoped out of the primary duct.

The interengageable means may further comprise complementary screw threads formed at the distal end of the primary duct and at the proximal end of the secondary duct, the arrangement being such that, in the fully telescoped out configuration, engagement and rotation of the screw threads moves the flanged tab of the primary duct into the aperture of the secondary duct and moves the distal end of the first air passageway so as to be contiguous with the proximal end of the second air passageway.

The invention will now be described in greater detail, by way of example, with reference to the drawings, in which:-
Figure 1 is a perspective view of a debris collector constructed in accordance with the invention;
Figure 2 is a schematic side elevation of the debris collector in the "vac" mode;
Figure 3 is a view similar to Figure 2, but showing the debris collector in the "blow" mode;
Figure 4 is a perspective view of the proximal end portion of the debris collector, showing its motor housing partially pivoted away from its main body;
Figure 5 is a view similar to that of Figure 4, but showing the motor housing pivoted fully away from the main body;
Figure 6 shows the distal end of the debris collector with its secondary tube telescoped within its primary tube;
Figure 7 is a view similar to that of Figure 6, but shows the secondary tube fully telescoped out of the primary tube;
Figure 8 shows the locking of the primary and secondary tubes in the fully telescoped position; and
Figure 9 is a perspective view showing the air outlet path provided by the primary and secondary tubes in their fully telescoped configuration.

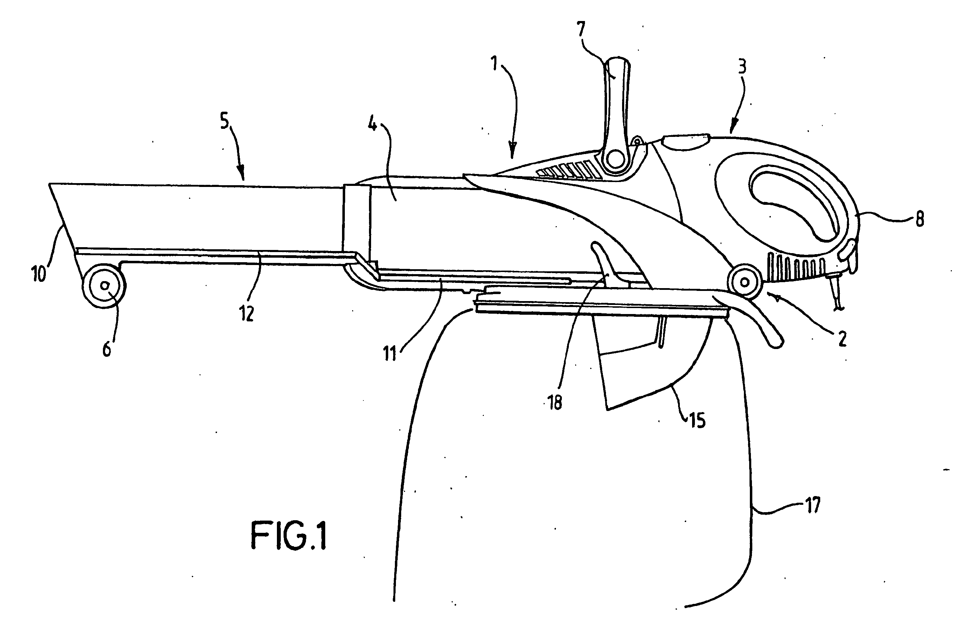

Referring to the drawings, Figure 1 shows a debris collector having a chassis 1 pivotally connected, at 2, to a housing 3. A primary duct 4 is fixed to the chassis 1, and a secondary duct 5 is telescopically mounted within the primary duct. A wheel 6 is provided at the distal end of the secondary duct 5. Handles 7 and 8 are associated respectively with the chassis 1 and the motor housing 3.

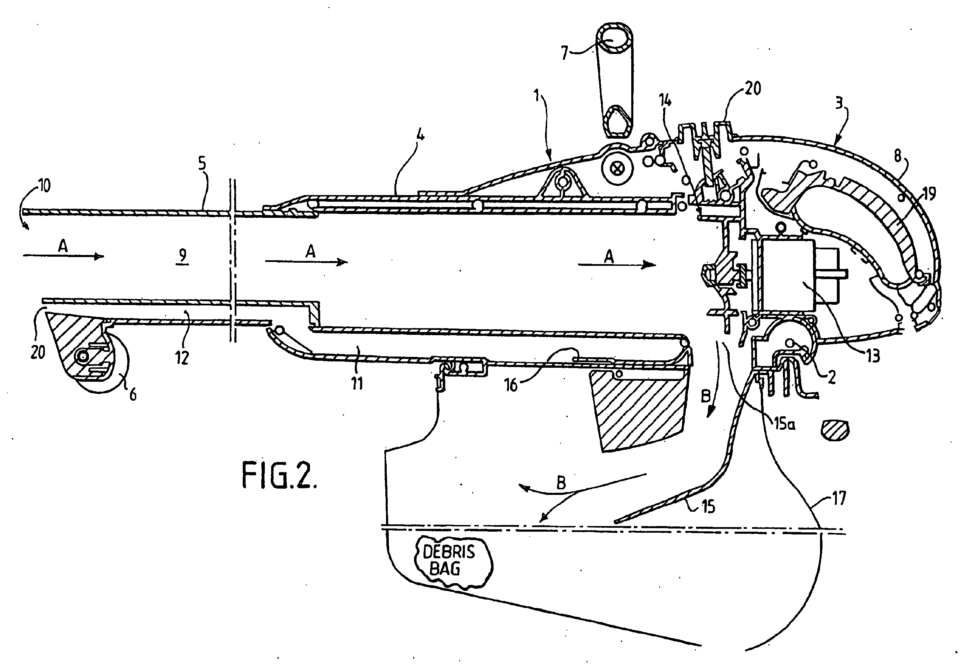

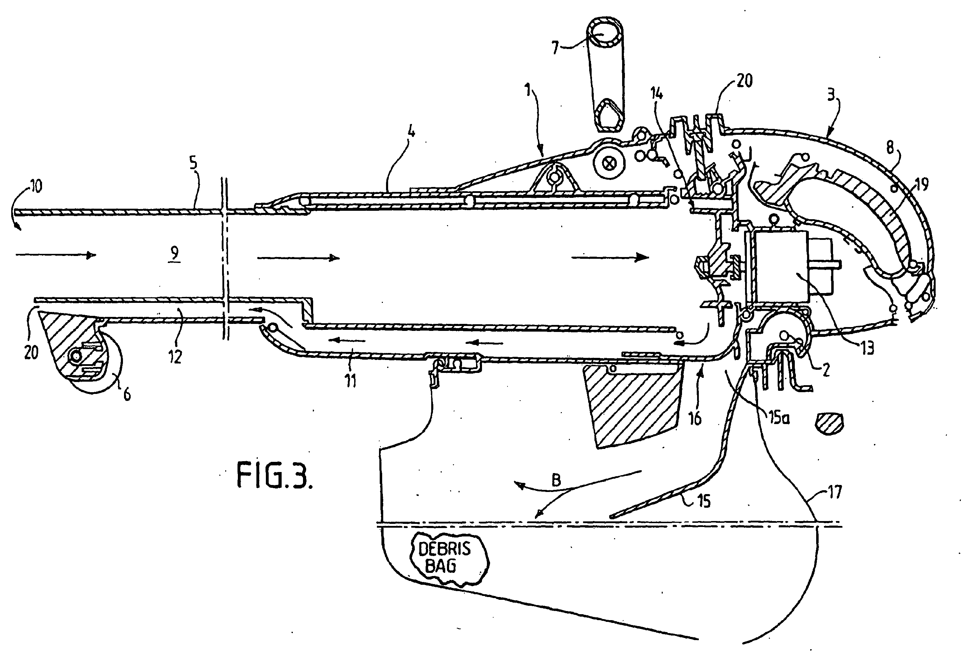

As shown in Figures 2 and 3, the telescoped primary and secondary ducts 4 and 5 define an internal duct 9 which leads from a collection mouth 10 at the distal end of the secondary duct towards the housing 3 provided at the proximal end of the collector. Contiguous passageways 11 and 12 are formed within the primary and secondary ducts 4 and 5.

The housing 3 houses an impeller 14 which is in drivable engagement with a motor 13. When the motor 13 is activated, the impeller 14 draws in a stream of air, via the collection mouth 10, as indicated by the arrows A. A nozzle 15 is formed on the chassis 1, the entrance 15a to the nozzle being in alignment with the impeller 14. A slide valve 16 is provided for controlling the flow of air from the impeller 14 to either the nozzle 15 or to the passageway 11. A debris bag 17 is fitted to the main body 1 to surround the outlet of the nozzle 15. A lever 18 is attached to the slide valve 16 for moving the slide valve between first and second operating positions.

When the slide valve 16 is in the first operating position (see Figure 2), the debris collector is in the "vac" mode. In this position, actuation of the motor 13, by means of a switch 19 provided on the handle 8 of the motor housing 3, causes the impeller 14 to draw a stream of air into the collector from the collection mouth 10 at the distal end of the secondary duct 5. Thus, if the collection mouth 10 is positioned adjacent to debris to be collected from the ground, the debris will be drawn in with the air stream A. As the slide valve 16 is positioned to close the passageway 11 and open the nozzle 15, the debris passes along the nozzle and into the debris bag 17 as indicated by the arrows B. Thus, the flow of air and debris from the impeller 14 to the debris bag 17 passes along smooth/tangential side walls defined by the nozzle 15, thereby reducing adherence of debris during its passage from the impeller to the debris bag. The motor 13 is rated to drive the impeller 14 at 13, 000 to 17,000 rpm, so that frangible debris striking the impeller is reduced in size, thereby increasing the storage capacity of the debris bag 17.

When the slide valve 16 is in the second operating position (see Figure 3), the debris collector is in the "blow" mode, in which case air from the impeller 14 is directed into the passageway 11, from where it passes along the passageway 12 and out of outlet 20 at the distal end of that passageway. In this position, the debris collector can be used to blow debris into suitable heaps for subsequent collection.

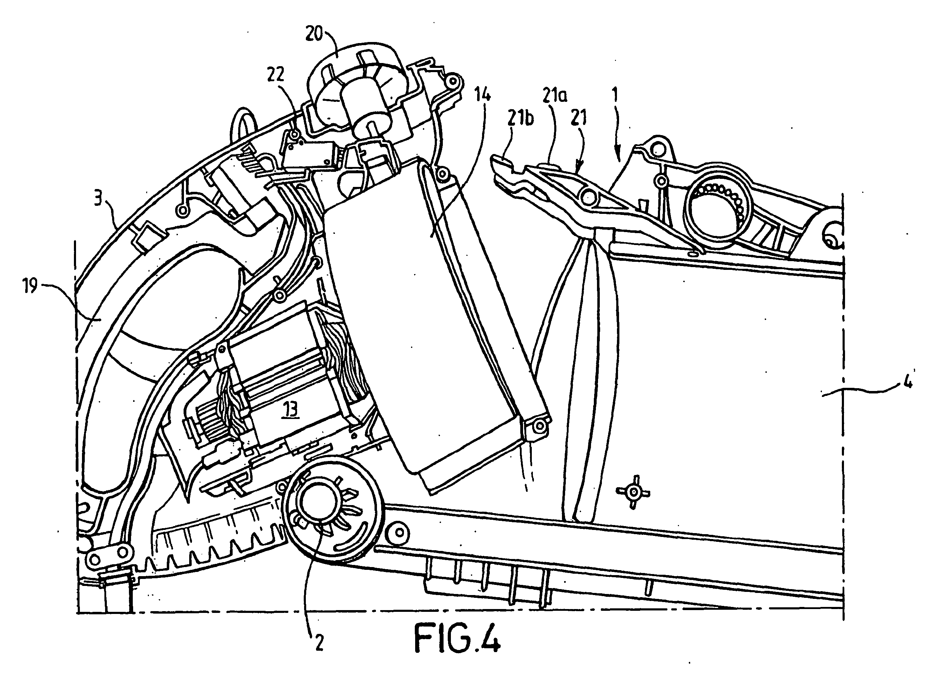

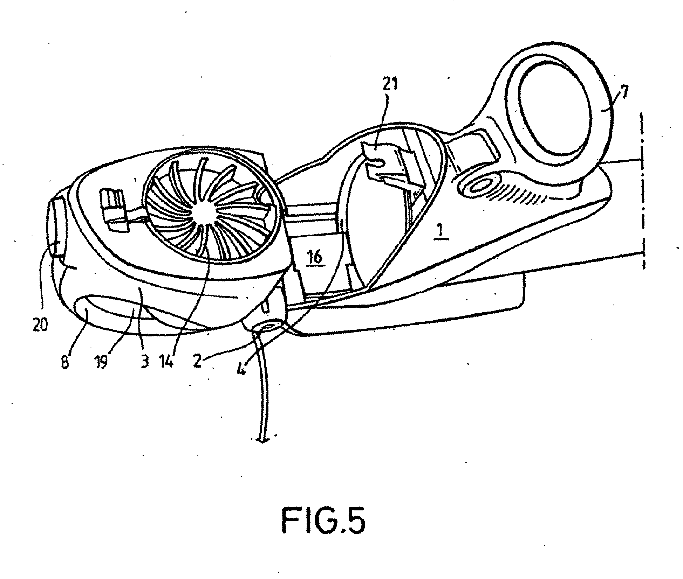

Figure 4 shows the pivotal connection between the chassis 1 and the housing 3, with the housing pivoted slightly away from the chassis. Figure 5 is similar to Figure 4, but shows the housing 3 fully pivoted away from the chassis 1. In this position, it will be apparent that both the impeller 14 and the slide valve 16 are easily accessible for cleaning, as is the proximal end of the primary duct 4 and the air outlet passage 11.

As best shown in Figure 4, the housing 3 is provided with a fixing bolt 20 which is engagable with an internally-threaded hollow stub shaft 21a of a flexible arm 21 fixed to the chassis 1 for locking the housing to the chassis when the debris collector is in the operational position shown in Figure 1. A microswitch 22 is associated with the fixing bolt 20, the arrangement being such that, in order to permit pivoting of the housing 3 relative to the chassis 1, the first two or three turns of the fixing bolt activate the microswitch 22, via an injection moulded location tab 21b associated with the flexible arm 21, to turn the motor 13 off. As about ten turns of the fixing bolt 20 are needed to remove it from engagement with the flexible arm 21, this ensures that there is plenty of time for the impeller 14 to stop before an operator can access the interior of the debris collector.

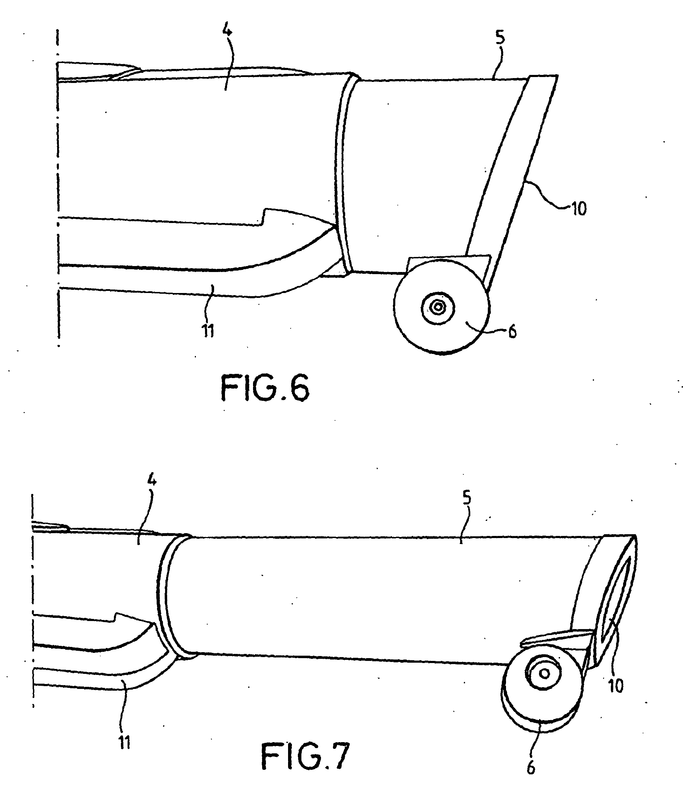

Figures 6 to 9 show the telescopic mounting of the secondary duct 5 within the primary duct 4. Thus, Figure 6 shows the secondary duct 5 fully telescoped within the primary duct 4. In this position, the debris collector can be packaged in a much smaller box than would be possible if the debris collector was provided at the point of sale with a single debris collection tube whose length is the same as the length of the fully telescoped out ducts 4 and 5.

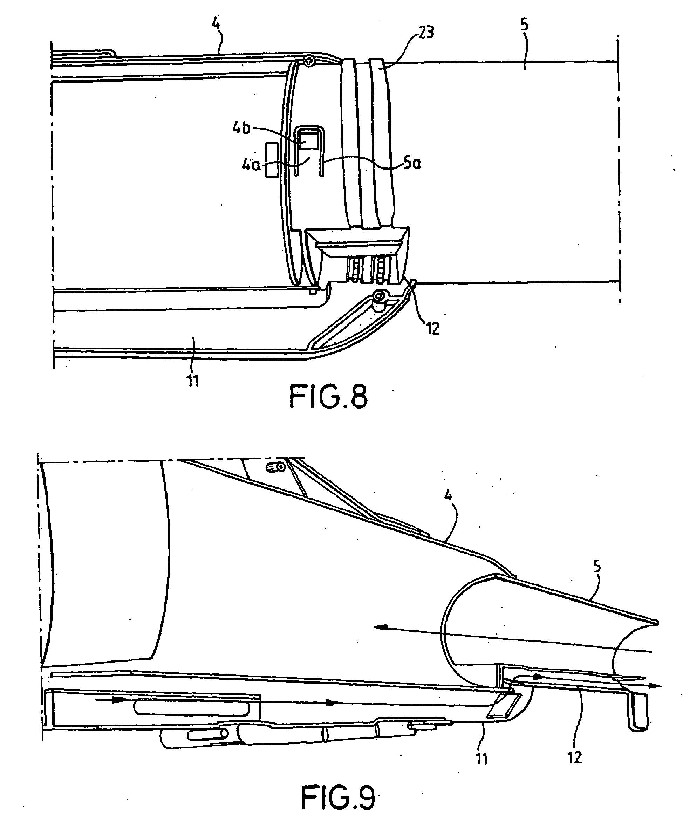

Figure 7 shows the ducts 4 and 5 in the fully telescoped out position, and Figure 8 shows how the ducts 4 and 5 are locked together in this fully telescoped out position. Thus, as shown in Figure 8, the secondary duct 5 is provided with an aperture 5a at its proximal end, and the primary duct 4 is provided with a flexible tab 4a having an outwardly-extending flange 4b which is engageable within the aperture 5a of the secondary duct 5. The two ducts 4 and 5 are formed with complementary screw threads, indicated generally by the reference numeral 23, the arrangement being such that, when the secondary duct is fully extended and rotated relative to the primary duct, the tab 4a snaps into position with the flange 4b abutting one end of the aperture 5a, thereby locking the two ducts together. The passageways 11 and 12, formed respectively outside the primary duct 4 and inside the secondary duct 5, are positioned so that the distal end of the passageway 5 is contiguous with the proximal end of the passageway 12 (see also Figure 9) when the two ducts are in the locked position. This arrangement ensures that, when the two ducts 4 and 5 are locked together in the operating position, the passageways 11 and 12 are contiguous, thereby defining the "blow" passageway from the impeller 14 to the distal end of the debris collector.

## Claims

1. A debris collector comprising:
a chassis (1);
an impeller (14) for establishing a flow of air; and
a duct (4, 5) supported by the chassis for conveying loose material entrained in a stream of air generated by the impeller (14) towards a proximal region of the duct from a collection mouth (10) at a distal end thereof;
wherein the impeller (14) is mounted in a housing (3) at the proximal end of the duct (4, 5); the housing (3) being pivotably attached to the chassis (1) in such a manner that pivotal movement of the housing (3) away from the chassis (1) exposes the impeller (14) and the downstream end of the duct for cleaning purposes.

2. A debris collector as claimed in claim 1, further comprising a removable collection container (17) for collecting the loose material, and the chassis being provided with a nozzle (15) for directing the stream of air and loose material from the impeller (14) into the removable collection container (17).

3. A debris collector as claimed in claim 2, wherein the nozzle (15) is directly aligned with the impeller (14) and is provided with smooth side walls for directing the air stream and loose material into the removable collection container (17).

4. Debris collector as claimed in any one of claims 1 to 3, further comprising an air passageway (11, 12) leading from the impeller (14) to the collection mouth (10), the air passageway being separate from the duct.

5. A debris collector as claimed in claim 4 when dependent on claim 2, further comprising a valve (16) for directing the stream of air from the impeller (14) either into the nozzle (15) or into the air passageway (11, 12).

6. A debris collector as claimed in claim 5, wherein the valve (16) is a slide valve mounted in the chassis for movement between a first position, in which the air stream passes from the impeller (14) into the air passageway (11, 12), and a second position, in which the air stream passes from the impeller (14) into the nozzle (15).

7. A debris collector as claimed in claim 6, wherein the slide valve (16) is positioned in such a manner that pivotal movement of the housing (3) relative to the chassis to expose the impeller (14) and the downstream end of the duct, also exposes the slide valve (16) for cleaning purposes.

8. A debris collector as claimed in claim 6 or claim 7, wherein the slide valve (16) defines a substantially smooth air-stream-engaging surface.

9. A debris collector as claimed in any one of claims 1 to 8, wherein the duct is constituted by primary (4) and secondary (5) ducts, the primary duct (4) being fixed to the chassis, and the secondary duct (5) being telescopically mounted with respect to the primary duct (4).

10. A debris collector as claimed in claim 9 when dependent on claim 4, wherein the air passageway is constituted by first (11) and second (12) air passageways associated respectively with the primary (4) and secondary (5) ducts.

11. A debris collector as claimed in claim 10, wherein the first air passageway (11) is positioned on the exterior of the primary duct (4), and the second air passageway (12) is positioned within the secondary duct (5).

12. A debris collector as claimed in claim 11, wherein the first and second air passageways are so formed that, when the secondary duct (5) is fully telescoped out of the primary duct (4), the distal end of the first air passageway (11) is contiguous with the proximal end of the second air passageway (12).

13. A debris collector as claimed in any one of claims 9 to 12, wherein the distal end of the primary duct (4) and the proximal end of the secondary duct (5) are provided with interengageable means for locking the two ducts together when the secondary duct (5) is fully telescoped out with respect to the primary duct (4).

14. A debris collector as claimed in claim 13, wherein the interengageable means is constituted by an aperture (5a) formed in the proximal end of the secondary duct (5), and by a flanged tab (4a, 4b) formed at the distal end of the primary duct (4), the flanged tab being engageable in the aperture when the secondary duct (5) is fully telescoped out of the primary duct (4).

15. A debris collector as claimed in claim 14, wherein the interengageable means further comprises complementary screw threads (23) formed at the distal end of the primary duct (4) and at the proximal end of the secondary duct (5), the arrangement being such that, in the fully telescoped out configuration, engagement and rotation of the screw threads (23) moves the flanged tab (4a, 4b) of the primary duct into the aperture (5a) of the secondary duct (5) and moves the distal end of the first air passageway (11) so as to be contiguous with the proximal end of the second air passageway (12).

## Patentansprüche

1. Schmutzsammeleinrichtung, mit:
einem Rahmen (1);
einem Flügelrad (14) zum Erzeugen eines Luftstroms; und
einem an dem Rahmen (1) gelagerten Kanal (4, 5) zum Fördern von losem Material, welches in einem von dem Flügelrad (14) erzeugten Luftstrom mitgerissen wird, von einem an einem distalen Ende des Kanals angeordneten Sammeleinlass (10) zu einem proximalen Abschnitt des Kanals;
wobei das Flügelrad (14) in einem Gehäuse (3) an dem proximalen Ende des Kanals (4, 5) montiert ist;
wobei das Gehäuse (3) derart verschwenkbar an dem Rahmen (1) montiert ist, dass eine Verschwenkbewegung des Gehäuses (3) weg von dem Rahmen (1) das Flügelrad (14) und das stromabwärts gelegene Ende des Kanals zu Reinigungszwecken freilegt.

2. Schmutzsammeleinrichtung nach Anspruch 1, welche weiterhin einen abnehmbaren Sammelbehälter (17) zum Sammeln des losen Materials aufweist, wobei der Rahmen eine Düse (15) zum Leiten des Stroms an Luft und losem Material von dem Flügelrad (14) in den abnehmbaren Sammelcontainer (17) aufweist.

3. Schmutzsammeleinrichtung nach Anspruch 2, wobei die Düse (15) direkt zu dem Flügelrad (14) ausgerichtet ist und glatte Seitenwände zum Leiten des Luftstroms und des losen Materials in den abnehmbaren Sammelcontainer (17) aufweist.

4. Schmutzsammeleinrichtung nach einem der Ansprüche 1 bis 3, welche weiterhin einen Luftdurchlass (11, 12) aufweist, welcher von dem Flügelrad (14) zu dem Sammeleinlass (10) führt, wobei der Luftdurchlass getrennt von dem Kanal ausgebildet ist.

5. Schmutzsammeleinrichtung nach Anspruch 4, welche bei Abhängigkeit von Anspruch 2 weiterhin ein Ventil (16) zum Leiten des Luftstroms von dem Flügelrad (14) entweder in die Düse (15) oder in den Luftdurchlass (11, 12) aufweist.

6. Schmutzsammeleinrichtung nach Anspruch 5, wobei das Ventil (16) zum Bewegen zwischen einer ersten Position, in welcher der Luftstrom von dem Flügelrad (14) in den Luftdurchlass (11, 12) strömt, und einer zweiten Position, in welcher der Luftstrom von dem Flügelrad (14) in die Düse (15) strömt, als in dem Rahmen montiertes Schiebeventil ausgebildet ist.

7. Schmutzsammeleinrichtung nach Anspruch 6, wobei das Schiebeventil (16) derart positioniert ist, dass eine Verschwenkbewegung des Gehäuses (3) relativ zu dem Rahmen, um das Flügelrad (14) und das stromabwärts gelegene Ende des Kanals freizulegen, ebenso das Schiebeventil (16) für Reinigungszwecke freilegt.

8. Schmutzsammeleinrichtung nach Anspruch 6 oder Anspruch 7, wobei das Schiebeventil (16) eine im Wesentlichen glatte Luftstromwechselwirkungsoberfläche definiert.

9. Schmutzsammeleinrichtung nach einem der Ansprüche 1 bis 8, wobei der Kanal mittels erster (4) und zweiter (5) Kanäle ausgebildet wird, wobei der erste Kanal (4) an dem Rahmen fixiert ist und der zweite Kanal (5) relativ zu dem ersten Kanal (4) aus- und einfahrbar montiert ist.

10. Schmutzsammeleinrichtung nach Anspruch 9 bei Abhängigkeit von Anspruch 4, wobei der Luftdurchlass mittels erster (11) und zweiter (12) Luftdurchlässe ausgebildet ist, welche entsprechend den ersten (4) und zweiten (5) Kanälen zugeordnet sind.

11. Schmutzsammeleinrichtung nach Anspruch 10, wobei der erste Luftdurchlass (11) auf der Außenseite des ersten Kanals (4) und der zweite Luftdurchlass (12) innerhalb des zweiten Kanals (5) angeordnet ist.

12. Schmutzsammeleinrichtung nach Anspruch 11, wobei der erste und der zweite Luftdurchlass derart ausgebildet sind, dass, wenn der zweite Kanal (5) vollständig aus dem ersten Kanal (4) ausgefahren ist, das distale Ende des ersten Luftdurchlasses (11) angrenzend an das proximale Ende des zweiten Luftdurchlasses (12) angeordnet ist.

13. Schmutzsammeleinrichtung nach einem der Ansprüche 9 bis 12, wobei das distale Ende des ersten Kanals (4) und das proximale Ende des zweiten Kanals (5) ineinander eingreifbare Elemente aufweisen, um die zwei Kanäle miteinander zu verriegeln, wenn der zweite Kanal (5) vollständig bezüglich des ersten Kanals (4) ausgefahren ist.

14. Schmutzsammeleinrichtung nach Anspruch 13, wobei das ineinander eingreifbare Element als eine Öffnung (5a) in dem proximalen Ende des zweiten Kanals (5) und als eine angeflanschte Lasche (4a, 4b) an dem distalen Ende des ersten Kanals (4) ausgebildet ist, wobei die angeflanschte Lasche mit der Öffnung in Wirkeingriff bringbar ist, wenn der zweite Kanal (5) aus dem ersten Kanal (4) vollständig ausgefahren ist.

15. Schmutzsammeleinrichtung nach Anspruch 14, wobei das ineinander eingreifbare Element weiterhin komplementäre Schraubengewindegänge (23) aufweist, welche an dem distalen Ende des ersten Kanals (4) und an dem proximalen Ende des zweiten Kanals (5) ausgebildet sind, wobei die Anordnung derart ausgebildet ist, dass in dem vollständig ausgefahrenen Zustand ein Eingriff und eine Rotation der Gewindegänge (23) die angeflanschte Lasche (4a, 4b) des ersten Kanals (4) in die Öffnung (5a) des zweiten Kanals (5) und das distale Ende des ersten Luftdurchlasses (11) derart bewegt, dass dieses an das proximale Ende des zweiten Luftdurchlasses (12) angrenzt.

## Revendications

1. Collecteur de débris comprenant :
un châssis (1) ;
une roue (14) pour établir un flux d'air ; et
un conduit (4, 5) supporté par le châssis pour convoyer le matériau détaché, entraîné dans un flux d'air, généré par le rotor (14) vers une zone proximale du conduit depuis une embouchure de collecte (10) jusqu'à une extrémité distale correspondante ;
dans lequel la roue (14) est montée dans un logement (3) à l'extrémité proximale du conduit (4, 5) ; le logement (3) étant fixé de manière pivotante au châssis (1), de façon à ce que le mouvement de pivotement du logement (3) en éloignement du châssis (1) expose la roue (14) et l'extrémité en aval du conduit dans un but de nettoyage.

2. Collecteur de débris selon la revendication 1, comprenant en outre un récipient de collecte amovible (17) pour collecter le matériau détaché, et le châssis étant doté d'une buse (15) pour diriger le flux d'air et le matériau détaché de la roue (14) dans le récipient de collecte amovible (17).

3. Collecteur de débris selon la revendication 2, dans lequel la buse (15) est directement alignée avec la roue (14) et est dotée de parois latérales lisses pour diriger le flux d'air et le matériau détaché dans le récipient de collecte amovible (17).

4. Collecteur de débris selon l'une quelconque des revendications 1 à 3, comprenant en outre un passage d'air (11, 12) conduisant de la roue (14) à l'embouchure de collecte (10), le passage d'air étant séparé du conduit.

5. Collecteur de débris selon la revendication 4, lorsqu'elle dépend de la revendication 2, comprenant en outre une soupape (16) pour diriger le flux d'air depuis la roue (14) soit dans la buse (15) ou dans le passage d'air (11, 12).

6. Collecteur de débris selon la revendication 5, dans lequel la soupape (16) est une soupape coulissante montée dans le châssis pour permettre un mouvement entre une première position, dans laquelle le flux d'air passe de la roue (14) dans le passage d'air (11, 12) et une seconde position, dans laquelle le flux d'air passe de la roue (14) dans la buse (15).

7. Collecteur de débris selon la revendication 6, dans lequel la soupape coulissante (16) est positionnée de sorte qu'un mouvement pivotant du logement (3) relativement au châssis pour exposer le rotor (14) et l'extrémité en aval du conduit, expose également la soupape coulissante (16) dans un but de nettoyage.

8. Collecteur de débris selon la revendication 6 ou la revendication 7, dans lequel la soupape coulissante (16) définit une surface en prise avec le flux d'air sensiblement lisse.

9. Collecteur de débris selon l'une quelconque des revendications 1 à 8, dans lequel le conduit est constitué de conduits primaires (4) et secondaires (5), le conduit primaire (4) étant fixé au châssis, et le conduit secondaire (5) étant monté de manière télescopique, relativement au conduit primaire (4).

10. Collecteur de débris selon la revendication 9, lorsqu'elle dépend de la revendication 4, dans lequel le passage d'air est constitué d'un premier (11) et d'un second (12) passages d'air associés respectivement aux conduits primaires (4) et secondaires (5).

11. Collecteur de débris selon la revendication 10, dans lequel le premier passage d'air (11) est positionné à l'extérieur du conduit primaire (4) et le second passage d'air (12) est positionné dans le conduit secondaire (5).

12. Collecteur de débris selon la revendication 11, dans lequel le premier passage et le second passage d'air sont formés, de sorte que lorsque le conduit secondaire (5) est totalement sorti du conduit primaire (4), l'extrémité distale du premier passage d'air (11) est contiguë avec l'extrémité proximale du second passage d'air (12).

13. Collecteur de débris selon l'une quelconque des revendications 9 à 12, dans lequel l'extrémité distale du conduit primaire (4) et l'extrémité proximale du conduit secondaire (5) sont dotées de moyens interchangeables pour verrouiller les deux conduits ensemble quand le conduit secondaire (5) est totalement sorti, relativement au conduit primaire (4).

14. Collecteur de débris selon la revendication 13, dans lequel les moyens en prise réciproque sont constitués d'une ouverture (5a) ménagée dans l'extrémité proximale du conduit secondaire (5) et d'une patte à brides (4a, 4b) formée à l'extrémité distale du conduit primaire (4), la patte à brides pouvant être mise en prise dans l'ouverture quand le conduit secondaire (5) est totalement sorti du conduit primaire (4).

15. Collecteur de débris selon la revendication 14, dans lequel les moyens en prise réciproque comprennent en outre des filetages de vis complémentaires (23) formés à l'extrémité distale du conduit primaire (4) et à l'extrémité proximale du conduit secondaire (5), la disposition étant telle que, dans la configuration totalement sortie, la prise et la rotation des filetages de vis (23) déplacent la patte à brides (4a, 4b) du conduit primaire dans l'ouverture (5a) du conduit secondaire (5) et déplacent l'extrémité distale du premier passage d'air (11), de façon à ce qu'il soit contigu avec l'extrémité proximale du second passage d'air (12).
